# NEW EUROPEAN PATENT SPECIFICATION

(11) **EP 0 640 187 B2**
(45) Date of publication and mention of the opposition decision: **22.12.1999**
(45) Mention of the grant of the patent: 18.09.1996
(21) Application number: 93910526.8
(22) Date of filing: 14.05.1993
(51) Int. Cl.: F16B 15/00

(54) **ANCHOR NAIL FASTENER**
ANKERSPITZEMBEFESTIGUNG
POINTE D'ANCRAGE

(30) Priority: 15.05.1992 SE 9201540
(43) Date of publication of application: 01.03.1995
(73) Proprietor: GUNNEBO INDUSTRIER AKTIEBOLAG, 233 22 Svedala (SE)
(72) Inventor: APPELROS, Sven, S-252 25 Helsingborg (SE)
(74) Representative: Berglund, Gustav Arthur
(86) International application number: SE9300422
(87) International publication number: WO9323677

## Description

This invention relates to an anchor serving to anchor an object to an underlying structure made of such a hard material as concrete, the anchor having a head and a shank to be driven into a hole prebored in the underlying structure.

Some prior-art anchors use elements that expand when the anchor is driven in. However, such anchors not only have the disadvantage of requiring the additional expanding element, but also suffer from the drawback of usually requiring the prebored hole to have an exact depth to ensure satisfactory expansion and anchorage.

DE-A1-33 45 331 teaches such an anchor, which however does not require the prebored hole to have a given depth. In this instance, the shank has a through slot extending in the longitudinal direction from the pointed tip of the anchor, thus forming two legs which are slightly parted by a resilient element placed in the slot. When the anchor is driven into the prebored hole, the shank legs are pressed together against the action of the resilient element therebetween. Once the anchor has been driven into the hole, the legs exert a pressure on the walls of the prebored hole owing to the action of the resilient element, but this pressure is relatively insignificant, and the anchor thus has poor resistance to extraction.

Alternatively, there are anchors which are made in one piece and whose shanks have an undulating shape and larger cross-sectional dimensions than the prebored hole. Thus, the shank is forced to change its shape when driven into the prebored hole.

US-A-4,828,445 teaches an anchor of this type Here, the shank is made of an elastic material and has an undulating shape. When driven into the prebored hole, the shank is thus straightened and strives to resist extraction by exerting a spring action on the walls of the hole. The hole and the shank have circular cross-section and essentially the same diameter. Because of the undulating shape of the shank, the anchor has a tendency towards bending when driven in, which may preclude the completion of this operation. Furthermore, an extraction force acting on the inserted anchor strives to straighten the undulating shape, thereby reducing the friction between the shank and the walls of the hole so that a relatively small force is needed for extracting the anchor. In addition, the shank has a limited number of contact points, more precisely the crests, where it is in frictional engagement with the walls of the hole, which also contributes to lessening the force needed for extracting the anchor Similarly, US-A-612538 discloses a spike with a shank having an undulating form and a longitudinal groove therein.

DE-A1-34 01 032 teaches another anchor, which is a modification of the anchor disclosed in DE-A1-33 45 331, by the resilient element being integrally formed with the shank of the anchor. However, the resilient element is made up of a limited number of cross bars or lugs, so that spring-back forces are applied to the legs of the shank only at certain points to produce the pressure on the walls of the hole. Thus, the pressure exerted on the walls of the hole is relatively limited also in this case. Moreover, the anchor has a very complicated shape and is difficult to manufacture.

A first object of the invention is to provide an anchor which consists of a single element, provides high resistance to extraction and is easy to produce.

A second object of the invention is to design the anchor such that the resistance to extraction can easily be varied and conformed to underlying structures of different materials, for instance.

According to the invention, these objects are achieved by an anchor for concrete and the like, said anchor having a head and a shank to be driven into a prebored hole whose cross-sectional dimensions are smaller than the largest cross-sectional dimensions of the shank, wherein the shank, at least along a portion closest to and located at a distance from the shank end opposite to the head, is widened by a longitudinal groove formed therein prior to hardening of the anchor, such that said portion has a substantially U-shaped cross-section.

Conveniently, the groove is made by form pressing, and its bottom may have a substantially V-shaped cross-section. Furthermore, the groove suitably tapers at the ends, thus avoiding the occurrence of fracture lines.

By the form pressing, the above portion is further so widened that its width is larger than the diameter of the remainder of the shank, which thus preferably is round. When used in concrete, the width of this portion may be at least approximately 30% larger than the diameter of the remainder of the shank.

Also, the length of this portion may be conformed to the desired resistance to extraction as well as the hardness of the walls of the hole.

When making an anchor according to the invention, one starts with a conventional blank having a head and a suitably round shank. The widened portion is produced in a press form, in which one die is flat or U-shaped and the other die is V-shaped, at least at the front portion After form pressing, the anchor is hardened.

It is to be understood that the inventive anchor is extremely simple to produce. As a result of the widened portion being U-shaped, extremely high pressures can, in addition, be achieved between this portion and the walls of the hole after the anchor has been driven in. By varying the length of the groove, these pressures can also be adjusted to obtain a good balance between the force required for driving in the anchor and the desired resistance to extraction.

The invention will now be described in more detail with reference to the accompanying drawing, in which
Fig. 1 is a perspective view of an embodiment of the inventive anchor: and
Fig. 2 is a cross-sectional view taken along the line II-II in Fig. 1.

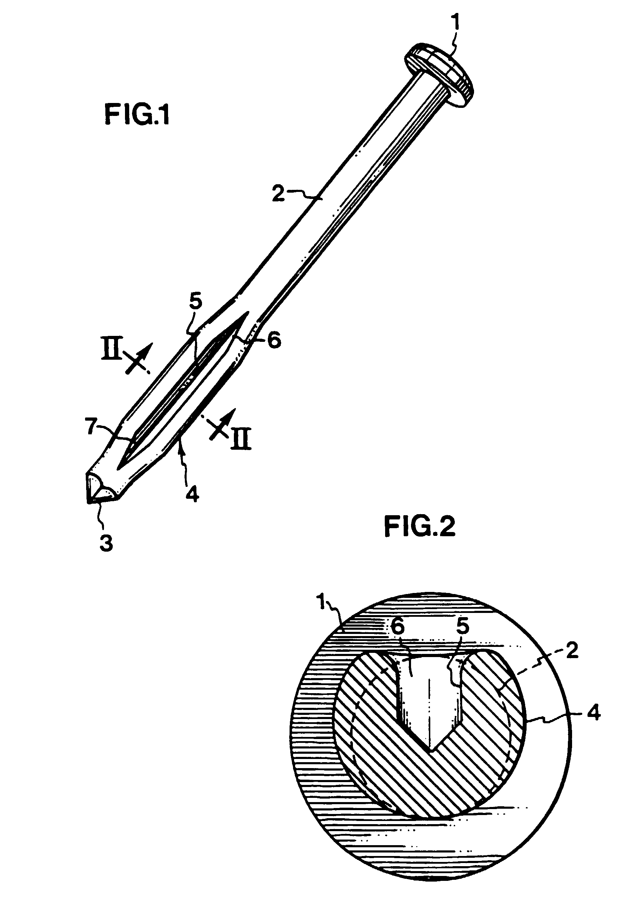

The illustrated anchor has a head 1 and a round shank 2. At the anchor end opposite to the head 1, i.e. at the tip 3, there are provided beads forming a widened portion 4. This portion 4 has a substantially U-shaped cross-section and is formed by form pressing with the aid of a wedge-shaped press tool and a flat or U-shaped base supporting structure, so as to form along the portion 4 a groove 5 having a V-shaped bottom and substantially parallel side walls. The groove 5 tapers at the ends 6, 7 to prevent the occurrence of fracture lines.

By the form pressing of the groove 5 extending approximately down to the centre of the shank 2, the width of the U-shaped portion 4 will be larger than the diameter of the remainder of the shank 2.

To make it easier to drive the anchor into a prebored hole of substantially the same diameter or of a slightly larger diameter than the shank 2 outside the portion 4, e.g. a 10% larger diameter, the portion 4 is provided at a certain distance from the tip 3.

When the anchor is driven into e.g a prebored hole in an underlying structure made of concrete, the portion 4 will be compressed, at least partly in such a manner that the width of the groove 5 will be reduced. After the anchor has been driven in, the widened portion 4 will act in the manner of a very stiff spring, exerting a very high pressure on the walls of the hole.

As a result, the inventive anchor has extremely high resistance to extraction, which is easily varied by altering the length of the groove 5.

It goes without saying that the above embodiment of the anchor can be modified within the scope of the invention as defined in the appended claims. For instance, the cross-sectional shape of the groove may be perfectly V-shaped or rounded at the bottom. Of course, also the shape of the head 1 may be conformed to the intended use. The groove may also taper continuously from the middle to the ends, as seen in cross-section, giving the beads a smooth shape making it easier to drive in the anchor.

## Claims

1. An anchor for concrete and the like, said anchor having a head (1) and a shank (2) to be driven into a prebored hole whose cross-sectional dimensions are smaller than the largest cross-sectional dimensions of the shank, wherein the shank (2), at least along a portion (4) closest to and located at a distance from the shank end (3) opposite to the head (1), is widened by a longitudinal groove (5) formed therein prior to hardening of the anchor, such that said portion (4) has a substantially U-shaped cross-section.

2. An anchor as set forth in claim 1, **characterised** in that the bottom of the groove (5) has a substantially V-shaped cross-section.

3. An anchor as set forth in claim 1 or 2, **characterised** in that the groove (5) tapers at the ends (6, 7).

4. An anchor as set forth in any one of claims 1-3, **characterised** in that the width of said portion (4) exceeds the diameter of the remainder of the shank (2).

5. An anchor as set forth in claim 4, **characterised** in that the width of said portion (4) is at least approximately 30% larger than the diameter of the remainder of the shank (2).

6. An anchor as set forth in any one of claims 1-5, **characterised** in that the length of said portion (4) is conformed to the desired resistance to extraction as well as the hardness of the walls of the hole.

7. An anchor as set forth in any one of claims 1-6, **characterised** in that the groove (5) extends approximately to the centre of the shank (2).

## Patentansprüche

1. Anker für Beton u.dgl., umfassend einen Kopf (1) und einen in ein vorgebohrtes Loch einzuschlagenden Schaft (2), wobei die Querschnittsabmessungen des Lochs kleiner sind als die grössten Querschnittsabmessungen des Schafts, wobei der Schaft (2) zumindest längs eines Abschnitts (4), der dem Schaftende (3) am nächsten liegt, das dem Kopf (1) gegenüberliegt, und sich im Abstand von demselben Ende befindet, durch eine vor dem Härten des Ankers darin geformte, längsverlaufende Nut (5) breiter gemacht worden ist, so dass der genannte Abschnitt (4) einen hauptsächlich U-förmigen Querschnitt aufweist.

2. Anker nach Anspruch 1, dadurch **gekennzeichnet,** dass der Boden der Nut (5) einen hauptsächlich V-förmigen Querschnitt aufweist.

3. Anker nach Anspruch 1 oder 2, dadurch **gekennzeichnet,** dass die Nut (5) sich an den Enden (6, 7) verjüngt.

4. Anker nach einem der Ansprüche 1-3, dadurch **gekennzeichnet,** dass die Breite des genannten Abschnitts (4) den Durchmesser des Rests des Schafts (2) übersteigt.

5. Anker nach Anspruch 4, dadurch **gekennzeichnet,** dass die Breite des genannten Abschnitts (4) mindestens etwa 30% grösser ist als der Durchmesser des Rests des Schafts (2).

6. Anker nach einem der Ansprüche 1-5, dadurch **gekennzeichnet,** dass die Länge des genannten Abschnitts (4) dem erwünschten Widerstand gegen Ausziehen sowie der Härte der Wände des Lochs angepasst ist.

7. Anker nach einem der Ansprüche 1-6, dadurch **gekennzeichnet,** dass die Nut (5) sich ungefähr zur Mitte des Schafts (2) erstreckt.

## Revendications

1. Ancre pour le béton et les matières similaires, ladite ancre ayant une tête (1) et une tige (2) à être enfoncée dans un trou qui a été foré à l'avance et dont les dimensions de coupe transversale sont inférieures aux plus grandes dimensions de coupe transversale de ladite tige, ancre dans laquelle la tige (2) est, au moins le long d'une partie (4) qui est la plus proche et située à une certaine distance de l'extrémité (3) de la tige qui est opposée à la tête (1), élargie par une rainure longitudinale (5) pratiquée dans la tige avant le durcissement de l'ancre, de sorte que ladite partie (4) a une coupe transversale sensiblement en U.

2. Ancre suivant la revendication 1, **caractérisée** en ce que le fond de ladite rainure (5) a une coupe transversale sensiblement en V.

3. Ancre suivant la revendication 1 ou 2, **caractérisée** en ce que ladite rainure (5) s'effile à ses extrémités (6, 7).

4. Ancre suivant l'une quelconque des revendications 1 à 3, **caractérisée** en ce que la largeur de ladite partie (4) est supérieure au diamètre du reste de la tige (2).

5. Ancre suivant la revendication 4, **caractérisée** en ce que la largeur de ladite partie (4) est supérieure d'au moins environ 30% au diamètre du reste de la tige (2).

6. Ancre suivant l'une quelconque des revendications 1 à 5, **caractérisée** en ce que la longueur de ladite partie (4) est adaptée à la résistance voulue à l'extraction ainsi qu'à la dureté des parois du trou.

7. Ancre suivant l'une quelconque des revendications 1 à 6, **caractérisée** en ce que ladite rainure (5) s'étend à peu près jusqu'au centre de ladite tige (2).
